# EUROPEAN PATENT APPLICATION

(11) **EP 4 831 303 A1**
(43) Date of publication of application: **28.10.2026**
(21) Application number: 24927049.7
(22) Date of filing: 13.11.2024
(51) Int. Cl.: C21B 5/00

(54) **BLAST FURNACE OPERATION METHOD**

(30) Priority: 27.02.2024 JP 2024027364
(71) Applicant: Nippon Steel Corporation, Tokyo 100-8071 (JP)
(72) Inventor: YASUDA, Naoto, Tokyo 100-8071 (JP); MIO, Hiroshi, Tokyo 100-8071 (JP); NAKANO, Kaoru, Tokyo 100-8071 (JP)
(74) Representative: Vossius & Partner Patentanwälte Rechtsanwälte mbB
(86) International application number: PCT/JP2024/040334
(87) International publication number: WO 2025/182165

(57) **Abstract**

A method for operating blast furnace according to an aspect of the present disclosure includes a parameter estimation step, which estimates the blast conditions and the pulverized coal injection rate in the second operation such that the hot metal production rate, the hot metal temperature, and the top gas temperature in the second operation are the same as the hot metal production rate, the hot metal temperature, and a top gas temperature in the reference operation; a step of acquiring change information, which acquires information regarding time-dependent changes in one or both of the hot metal temperature and the hot metal production rate when the second operation is performed based on the blast conditions and the pulverized coal injection rate estimated in the parameter estimation step after switching from the reference operation to a first operation and then delaying by a predetermined time; an iteration step, which performes the step of acquiring change information a plurality of times while changing the predetermined time; and a step of determining an optimal delay time, which determines the predetermined time that minimizes the time-dependent change in the hot metal temperature or the hot metal production rate as an optimal delay time based on the information acquired in the iteration step, in which after switching from the reference operation to the first operation and then delaying by the optimal delay time, the second operation based on the blast conditions and the pulverized coal injection rate estimated in the parameter estimation step is started.

## Description

### TECHNICAL FIELD

The present disclosure relates to a method for operating blast furnace.

Priority is claimed on Japanese Patent Application No. 2024-027364, filed February 27, 2024, the content of which is incorporated herein by reference.

### BACKGROUND ART

In the blast furnace operation, sinter, pellets, lump ore, and the like (hereinafter, also collectively referred to as "iron-bearing materials") as an iron source, and coke as a reducing agent and fuel are alternately charged from a furnace top portion, hot blast is blown through a tuyere in a furnace lower portion, and auxiliary fuel such as pulverized coal is blown in. The iron-bearing materials and the coke (hereinafter, also collectively referred to as "charged materials") charged from the furnace top portion form an alternately stacked ore layer and coke layer, and are heated and raised in temperature by gas rising from the furnace lower portion while gradually descending toward the furnace lower portion in the blast furnace as the burden decend. The iron-bearing materials are heated and reduced while descending in the blast furnace, are melted and separated into molten pig iron and slag, and are drip down to the hearth.

So far, for the purpose of reducing a reducing agent ratio (RAR), improving the permeability of an ore layer, and improving permeability of gas and liquid due to an increase in temperature of deadman coke, a method for operating blast furnace in which a part of iron-bearing materials is replaced with reduced iron has been studied. Here, examples of the reduced iron include scrap, mold pig iron, direct reduced iron (DRI) pellets, hot briquetted iron (HBI), and the like. Mold pig iron refers to cold pig iron cast into lumps weighing about 10 to 30 kg to facilitate handling.

Examples of the method for operating blast furnace in which a part of iron-bearing materials is replaced with reduced iron include the methods described in Patent Documents 1 to 3. Patent Document 1 proposes, for the purpose of maintaining the reduction efficiency and high-temperature properties of an ore layer when the alumina content in sintered ore increases, a method for operating blast furnace that increases an amount of scrap charged from a furnace top to a furnace peripheral portion. Patent Document 2 proposes a method for operating blast furnace that maintains the gas permeability in the furnace by replacing a part of iron-bearing materials with scrap when the reduction degradation index (RDI) of sintered ore or the drum strength index (DI) of coke deteriorates from a reference value. Patent Document 3 proposes a method for operating blast furnace in which an increase in pressure loss (deterioration of gas permeability) accompanying an increase in the blowing amount of pulverized coal is measured, and the charging amount of reduced iron is increased according to the amount of the increase.

### Citation List

### Patent Documents

Patent Document 1: Japanese Patent No. 3017009
Patent Document 2: Japanese Unexamined Patent Application, First Publication No. 2008-240028
Patent Document 3: Japanese Patent No. 3589016

### Non Patent Documents

Non-Patent Document 1: Kouji TAKATANI, Takanobu INADA, and Yutaka UJISAWA, "Three-dimensional Dynamic Simulator for Blast Furnace", ISIJ International, Vol. 39 (1999), No. 1, pp. 15 to 22
Non-Patent Document 2: Iron and Steel, Vol. 79 (1993) N618

### SUMMARY OF INVENTION

### Technical Problem

However, in a case where a part of an iron-bearing material is replaced with reduced iron and charged, operating parameters such as the hot metal production rate, the hot metal temperature, and a top gas temperature are changed abnormally. The larger the change in the charging amount of reduced iron is, the larger the change in the operating parameters is.

By appropriately adjusting the blast conditions (blast volume and oxygen enrichment amount) and the pulverized coal injection rate, it is possible to suppress the changes in the hot metal production rate, the hot metal temperature, the top gas temperature, and the like. However, depending on the values of the blast conditions (blast volume and oxygen enrichment amount) and the pulverized coal injection rate, and the timing of changing these values, the hot metal production rate and the hot metal temperature may fluctuate greatly, and the blast furnace operation may be unstable.

In view of such a point, an object of the present disclosure is to stably operate a blast furnace while suppressing fluctuations in the hot metal production rate and the hot metal temperature when the charging amount of reduced iron is increased or decreased in a reduced-iron operation that is an operation in which a part of iron-bearing materials is replaced with reduced iron and charged.

### Solution to problem

The gist of the present disclosure is as follows.
(1) A method for operating blast furnace according to an aspect of the present disclosure includes: a parameter estimation step, which estimates blast conditions and pulverized coal injection rate in a second operation such that a hot metal production rate, a hot metal temperature, and a top gas temperature in the second operation are the same as a hot metal production rate, a hot metal temperature, and a top gas temperature in a reference operation, in which a first operation is defined as an operation in which blast conditions and a pulverized coal injection rate are the same as blast conditions and a pulverized coal injection rate in the reference operation, and a charging amount of reduced iron is different from a charging amount of reduced iron in the reference operation, and in which the second operation is defined as an operation in which a charging amount of reduced iron is the same as the charging amount of reduced iron in the first operation, and blast conditions and a pulverized coal injection rate are different from the blast conditions and the pulverized coal injection rate in the first operation; a step of acquiring change information, which acquires information regarding time-dependent changes in one or both of the hot metal temperature and the hot metal production rate when the second operation is performed based on the blast conditions and the pulverized coal injection rate estimated in the parameter estimation step after switching from the reference operation to the first operation and then delaying by a predetermined time; an iteration step, which performes the step of acquiring change information a plurality of times while changing the predetermined time; and a step of determining optimal delay time, which determines the predetermined time that minimizes the time-dependent change in the hot metal temperature or the hot metal production rate as an optimal delay time based on the information acquired in the iteration step, wherein, after switching from the reference operation to the first operation and then delaying by the optimal delay time, the second operation based on the blast conditions and the pulverized coal injection rate estimated in the parameter estimation step is started.
(2) Preferably, in the method for operating blast furnace according to (1), the charging amount of reduced iron in the first operation is larger than the charging amount of reduced iron in the reference operation.
(3) Preferably, in the method for operating blast furnace according to (1) or (2), in the second operation, a blending ratio of reduced iron contained in iron-bearing materials is 0.5% by mass or more and 50% by mass or less.
(4) Preferably, in the method for operating blast furnace according to any one of (1) to (3), in the step of acquiring change information, the information regarding the time-dependent changes in both the hot metal temperature and the hot metal production rate is acquired, and in the step of determining an optimal delay time, among the hot metal temperature and the hot metal production rate, the predetermined time that minimizes the time-dependent change in the hot metal temperature or the hot metal production rate having higher sensitivity to a delay time is determined as the optimal delay time.
(5) Preferably, the method for operating blast furnace according to any one of (1) to (4) further includes: a second parameter estimation step, which estimates blast conditions and pulverized coal injection rate in a fourth operation such that a hot metal production rate, a hot metal temperature, and a top gas temperature in the fourth operation are the same as the hot metal production rate, the hot metal temperature, and the top gas temperature in the second operation, in which the third operation is defined as an operation in which blast conditions and a pulverized coal injection rate are the same as the blast conditions and the pulverized coal injection rate in the second operation, and a charging amount of reduced iron is larger than the charging amount of reduced iron in the second operation, and in which the fourth operation is defined as an operation in which a charging amount of reduced iron is the same as the charging amount of reduced iron in the third operation, and blast conditions and a pulverized coal injection rate are different from the blast conditions and the pulverized coal injection rate in the third operation; a second step of acquiring change information, which acquires information regarding time-dependent changes in one or both of the hot metal temperature and the hot metal production rate when the fourth operation is performed based on the blast conditions and the pulverized coal injection rate estimated in the second parameter estimation step after switching from the second operation to the third operation and then delaying by a predetermined time; a second iteration step, which performes the second step of acquiring change information a plurality of times while changing the predetermined time; and a second step of determining an optimal delay time, which determines the predetermined time that minimizes the time-dependent change in the hot metal temperature or the hot metal production rate as a second optimal delay time based on the information acquired in the second iteration step, wherein, after switching from the second operation to the third operation and then delaying by the second optimal delay time, the fourth operation based on the blast conditions and the pulverized coal injection rate estimated in the second parameter estimation step is started.
(6) Preferably, the method for operating blast furnace according to any one of (1) to (5) further includes: a second parameter estimation step, which estimates blast conditions and pulverized coal injection rate in a fourth operation such that a hot metal production rate, a hot metal temperature, and a top gas temperature in the fourth operation are the same as the hot metal production rate, the hot metal temperature, and the top gas temperature in the second operation, in which the third operation is defined as an operation in which blast conditions and a pulverized coal injection rate are the same as the blast conditions and the pulverized coal injection rate in the second operation, and a charging amount of reduced iron is larger than the charging amount of reduced iron in the second operation and in which the fourth operation is defined as an operation in which a charging amount of reduced iron is the same as the charging amount of reduced iron in the third operation, and blast conditions and a pulverized coal injection rate are different from the blast conditions and the pulverized coal injection rate in the third operation, wherein after switching from the second operation to the third operation and then delaying by the optimal delay time, the fourth operation based on the blast conditions and the pulverized coal injection rate estimated in the second parameter estimation step is started.

### Advantageous Effects of Invention

According to the present disclosure, in a reduced-iron operation, it is possible to stably operate a blast furnace while suppressing fluctuations in the hot metal production rate and the hot metal temperature when the charging amount of reduced iron is increased or decreased. As a result, it is possible to sufficiently receive an effect of improving reduction efficiency and gas permeability and an effect of reducing a reducing agent ratio (RAR) due to the charging of reduced iron.

### BRIEF DESCRIPTION OF DRAWINGS

[FIG. 1] A schematic diagram of a blast furnace.
[FIG. 2] A flowchart showing a method for operating blast furnace.
[FIG. 3] An acquisition result of information on a time-dependent change in the hot metal production rate and the hot metal temperature (Examples).
[FIG. 4A] A graph showing a method for determining an optimal delay time according to a determination method 1.
[FIG. 4B] A graph showing a method for determining an optimal delay time according to the determination method 1.
[FIG. 5A] A graph showing a method for determining an optimal delay time according to a determination method 2.
[FIG. 5B] A graph showing a method for determining an optimal delay time according to the determination method 2.
[FIG. 6A] A graph corresponding to the determination method **1,** in which the horizontal axis is a "switching timing for switching from a first operation to a second operation" and the vertical axis is the "maximum value of a difference from the hot metal production rate reference value".
[FIG. 6B] A graph corresponding to the determination method **1,** in which the horizontal axis is a "switching timing for switching from a first operation to a second operation" and the vertical axis is the "maximum value of a difference from the hot metal production rate reference value".
[FIG. 7A] A graph corresponding to the determination method **1,** in which the horizontal axis is the "switching timing for switching from a first operation to a second operation" and the vertical axis is the "maximum value of a difference from the hot metal temperature reference value".
[FIG. 7B] A graph corresponding to the determination method **1,** in which the horizontal axis is the "switching timing for switching from a first operation to a second operation" and the vertical axis is the "maximum value of a difference from the hot metal temperature reference value".
[FIG. 8A] A graph corresponding to the determination method 2, in which the horizontal axis is the "switching timing for switching from a first operation to a second operation" and the vertical axis is the "integral value of a difference from the hot metal production rate reference value".
[FIG. 8B] A graph corresponding to the determination method 2, in which the horizontal axis is ther "switching timing for switching from a first operation to a second operation" and the vertical axis is the "integral value of a difference from the hot metal production rate reference value".
[FIG. 9A] A graph corresponding to the determination method 2, in which the horizontal axis is the "switching timing for switching from a first operation to a second operation" and the vertical axis is the "integral value of a difference from the hot metal temperature reference value".
[FIG. 9B] A graph corresponding to the determination method 2, in which the horizontal axis is the "switching timing for switching from a first operation to a second operation" and the vertical axis is the "integral value of a difference from the hot metal temperature reference value".

### DESCRIPTION OF EMBODIMENTS

### <Schematic configuration of blast furnace>

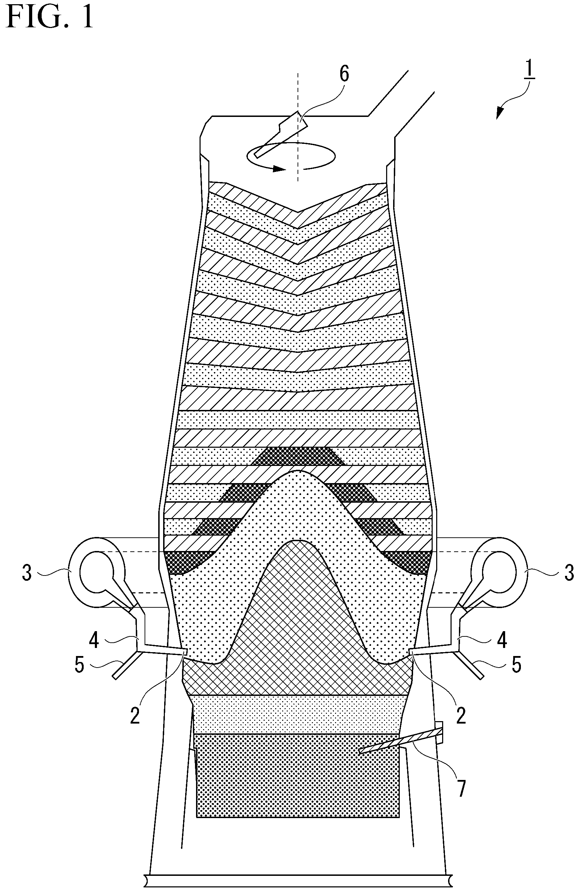

FIG. 1 is a schematic view of a blast furnace in the present embodiment. A blast furnace 1 is a bell-less blast furnace, and includes a tuyere 2, an annular pipe 3, a blow pipe 4, a pulverized coal injection lance 5, a rotating chute 6, and a tap hole 7. It is noted that the present disclosure can also be applied to a bell-type blast furnace that does not have a rotating chute.

The tuyere 2 is an injection port for blowing hot blast generated in a hot-blast stove (not shown) into the blast furnace 1, and a plurality of tuyeres 2 are provided along a furnace circumferential direction of the blast furnace 1. Pulverized coal, which will be described later, can be blown into the furnace together with the hot blast from the tuyere 2.

The annular pipe 3 is disposed to surround a lower portion of the blast furnace 1. A plurality of blow pipes 4 are provided in the annular pipe 3 at predetermined intervals in a circumferential direction. The annular pipe 3 supplies the hot blast sent from the hot-blast stove to the blow pipe 4.

Each blow pipe 4 is connected to the annular pipe 3 and is connected to a different tuyere 2. The blow pipe 4 blows the hot blast sent from the annular pipe 3 into the blast furnace 1 via the tuyere 2.

The pulverized coal injection lance 5 is provided to blow the pulverized coal from the tuyere 2 into the furnace. The pulverized coal injection lance 5 penetrates a wall surface of each blow pipe 4 and extends into an interior of each blow pipe 4. The pulverized coal blown into the blow pipe 4 from the pulverized coal injection lance 5 is blown into the furnace via the tuyere 2 together with the hot blast flowing into the blow pipe 4 from the annular pipe 3.

The rotating chute 6 alternately charges the iron-bearing material and the coke in a layer shape while rotating around an axis extending in an up-down direction. As the iron-bearing material, lump ore, sinter, pellets, non-sintered carbon-containing agglomerated ore, or the like can be used. However, in a case where a reduced-iron operation is performed, a part of the iron-bearing material can be replaced with reduced iron. In addition, the iron-bearing material may include a reduction auxiliary material such as small lump coke. The coke may include ferro coke. By controlling a driving mode (forward tilting/reverse tilting), a tilt angle, and a rotation speed of the rotating chute 6, the blast furnace raw material can be charged to a desired position. It is noted that the forward tilting is a driving mode of driving the rotating chute 6 from a furnace wall side toward a furnace center side, and the reverse tilting is a driving mode of driving the rotating chute 6 from the furnace center side toward the furnace wall side.

The tap hole 7 is provided at a furnace bottom part of the blast furnace 1, and taps the hot metal generated by reducing the iron-bearing material. A plurality of tap holes 7 are provided along a furnace circumferential direction, and the hot metal can be continuously or intermittently tapped.

In a case where the reduced iron is added to the iron-bearing material to be charged into the blast furnace, operating parameters such as the hot metal production rate, the hot metal temperature, and a top gas temperature are changed abnormally. To respond to the change in the operating parameters, in a normal operation of the blast furnace, the blast conditions and the pulverized coal injection rate are also changed after a predetermined time has been elapsed following change of the charging amount of the reduced iron. Accordingly, the hot metal production rate, the hot metal temperature, and the top gas temperature are intended to be substantially the same before and after the change in the charging amount of the reduced iron. However, in a case where a fluctuation amount of the hot metal production rate or the hot metal temperature is significantly large, there is a concern that the blast furnace operation may be unstable in a case where a timing of changing the blast conditions and the pulverized coal injection rate is not appropriate.

In the method for operating blast furnace according to the present embodiment, a state before the charging amount of the reduced iron is changed is referred to as a reference operation. The reference operation is an operation executed under the operating parameters that are premise conditions for analysis. A state after all of the charging amount of the reduced iron, the blast conditions, and the pulverized coal injection rate are changed from the values of the reference operation is referred to as a second operation. A state in which the charging amount of the reduced iron is changed from the value of the reference operation, but the blast conditions and the pulverized coal injection rate are not changed from the values of the reference operation is referred to as a first operation. The detailed definitions of the reference operation, the first operation, and the second operation will be described in detail later. In the method for operating blast furnace according to the present embodiment, the first operation is provided, and the change in the blast conditions and the pulverized coal injection rate is delayed.

Table 1 is a comparison table showing an outline of the reference operation, the first operation, and the second operation. In a case where the reference operation is switched to the first operation, the charging amount of the reduced iron is increased or decreased by α, but the conditions of the blast conditions and the conditions of the pulverized coal injection rate are not changed. In a case where the first operation is switched to the second operation, the charging amount of the reduced iron is not changed, but the conditions of the blast conditions and the conditions of the pulverized coal injection rate are changed.

**[Table 1]**

| | Reference operation | First operation | Second operation |
|---|---|---|---|
| Charging amount of reduced iron (blending ratio) | k | k ± α | k ± α |
| Blast conditions | Condition A | Condition A | Condition B |
| Pulverized coal injection rate | Condition A | Condition A | Condition B |
| Hot metal production rate | X | Y | X |
| Hot metal temperature | X | Y | X |
| Top gas temperature | X | Y | X |

The present inventors have found that the blast furnace operation can be stabilized by optimizing a time for delaying the change in the blast conditions and the pulverized coal injection rate with respect to the change in the charging amount of the reduced iron, that is, a time interval from a start time point of the first operation to a start time point of the second operation. The delay time, that is, the time interval from the start time point of the first operation to the start time point of the second operation can be optimized by a parameter estimation step, a step of acquiring change information, an iteration step, and a minimum delay time acquisition step described below. The optimal delay time is a value acquired by simulation before the start of the second operation. It is noted that the start time point of the first operation is a point in time at which the charging amount of the reduced iron is changed from the value in the reference operation. The start time point of the second operation is a point in time at which one or both of the blast conditions and the pulverized coal injection rate are changed from the values in the first operation.

### <Flow of method for operating blast furnace>

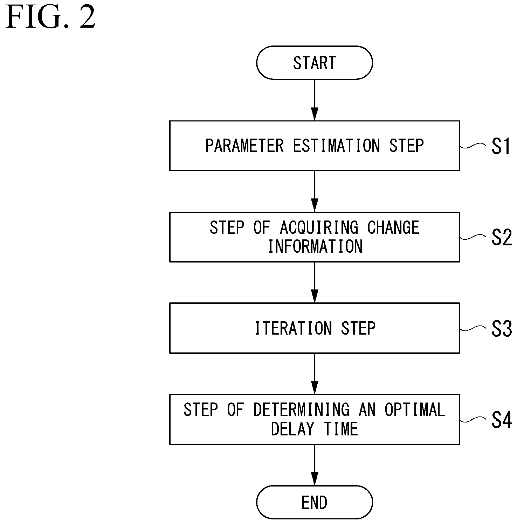

An embodiment of a method for operating blast furnace according to the present disclosure will be described with reference to FIG. 2. FIG. 2 is a flowchart showing the method for operating blast furnace according to the present embodiment. The method for operating blast furnace according to the present embodiment includes a reference operation, a first operation, and a second operation.

The operation method includes a parameter estimation step (S1), a step of acquiring change information (S2), an iteration step (S3), and a minimum delay time acquisition step (S4). Hereinafter, each step will be described in detail.

### (S1: Parameter estimation step)

The method for operating blast furnace according to the present embodiment is an operation mode in which the reference operation is switched to the first operation and then the first operation is switched to the second operation. Therefore, before describing the content of the parameter estimation step, the definitions of the reference operation, the first operation, and the second operation will be described.

The "reference operation" is an operation executed under operating parameters that are the premise conditions for analysis. The reference operation may be an operation that does not include reduced iron as an iron-bearing material, or may be an operation that includes reduced iron. In addition, it is desirable that the reference operation is an operation in a stable operation period. The stable operation period is a period in which the blast furnace operation is stable, and is a period excluding periods immediately before and after the blast furnace outage, periods during which an abrupt increase in burden occurs, periods during which an abrupt increase or decrease in the hot metal production rate occurs, periods during which blast conditions fluctuate significantly.

In the present disclosure, the blast conditions and the pulverized coal injection rate in the reference operation are applied to the first operation described later. In addition, in the present disclosure, the hot metal production rate, the hot metal temperature, and the top gas temperature in the reference operation are used in the parameter estimation step. In the stable operation period, these values can be made substantially constant. The blast conditions and the pulverized coal injection rate, and the hot metal production rate, the hot metal temperature, and the top gas temperature at any point in time in the stable operation period can be used in the subsequent operation. Preferably, the blast conditions and the pulverized coal injection rate, and the hot metal production rate, the hot metal temperature, and the top gas temperature immediately before the reference operation is ended and the first operation is started are used in the subsequent operation. Immediately before the start of the first operation is, for example, a period from 8 hours before the start of the first operation to the start of the first operation.

The "first operation" is a blast furnace operation, and is an operation in which the blast conditions and the pulverized coal injection rate are the same as those in the reference operation, and the charging amount of reduced iron is different from that in the reference operation. The first operation may be an operation in which the charging amount of reduced iron is larger than that in the reference operation, or may be an operation in which the charging amount of reduced iron is smaller than that in the reference operation. An operation in which the charging amount of reduced iron is not substantially the same as that in the reference operation is regarded as the first operation.

The "blast conditions" are the blast volume, the oxygen enrichment ratio, and the blast moisture content. Therefore, in a case where the charging amount of reduced iron in the reference operation is 0, the charging amount of reduced iron in the first operation is more than 0. In addition, in a case where the charging amount of reduced iron in the reference operation is k (k > 0), the charging amount of reduced iron in the first operation is more than k or less than k.

However, it is desirable to set the blending ratio of the reduced iron in the first operation and the second operation to 0.5% by mass or more and 50% by mass or less.

In a case where the blending ratio in the first operation is 0.5% by mass or more, the hot metal production rate and the hot metal temperature are likely to fluctuate greatly at the start of the first operation and the second operation. Therefore, the effect of the operation method according to the present disclosure is more preferably exhibited. The blending ratio of the reduced iron in the first operation may be set to 1% by mass or more, 5% by mass or more, or 10% by mass or more.

On the other hand, the reason why the upper limit of the blending ratio in the first operation is preferably set to 50% by mass is that there is a disadvantage that the amount of reducing gas is reduced in terms of operation design and the top gas temperature cannot be maintained because, in a case where the amount of reduced iron is excessively large, the amount of reducible oxygen is reduced. The blending ratio of the reduced iron in the first operation may be set to 45% by mass or less, 40% by mass or less, or 30% by mass or less.

In a normal operation, as the blending ratio of the reduced iron in the first operation is increased, the fluctuation amounts of the hot metal production rate and the hot metal temperature are increased, and there is a concern that the blast furnace operation may become unstable. However, in the method for operating blast furnace according to the present disclosure, the blast furnace can be stably operated while suppressing the fluctuation of the hot metal production rate and the hot metal temperature. Therefore, as the blending ratio of the reduced iron in the first operation is increased, the action effect of the method for operating blast furnace according to the present disclosure is more remarkable, which is preferable.

The "second operation" is an operation in which the charging amount of reduced iron is the same as that in the first operation and the blast conditions and the pulverized coal injection rate are different from those in the first operation. Therefore, the example of the blending ratio of the reduced iron in the first operation described above can also be applied to the second operation. The purpose of the "parameter estimation step" described below is to search for the blast conditions and the pulverized coal injection rate that are optimal for the second operation.

In the parameter estimation step, the blast conditions and the pulverized coal injection rate in the second operation are estimated such that the hot metal production rate, the hot metal temperature, and the top gas temperature in the second operation are the same as those in the reference operation.

The expression "the same as the reference operation" also includes "substantially the same". For example, in a case where the difference between the hot metal production rate of the reference operation and the hot metal production rate of the second operation is approximately ±100 (t/d), the difference is not regarded as an operation fluctuation requiring an operation action, and can be considered to be "the same hot metal production rate". In a case where the difference between the hot metal temperature of the reference operation and the hot metal temperature of the second operation is approximately ±2°C, the difference is not regarded as an operation fluctuation requiring an operation action, and can be considered to be "the same hot metal temperature". In a case where the difference between the top gas temperature of the reference operation and the top gas temperature of the second operation is approximately ±10 (°C), the difference is not regarded as an operation fluctuation requiring an operation action, and can be considered to be "the same hot metal temperature".

The parameter estimation step can be realized by, for example, analysis processing using a blast furnace mathematical model. Specifically, the processing of estimating the hot metal production rate, the hot metal temperature, and the top gas temperature in the reference operation and the processing of estimating the blast conditions and the pulverized coal injection rate in the second operation are realized by the analysis processing using the blast furnace mathematical model.

The blast furnace mathematical model (for example, see Non Patent Document 1) is a mathematical model that divides an internal region of a blast furnace into a mesh shape, substitutes preset setting conditions into calculation expressions of a mass balance, a momentum balance, and an energy balance to perform calculation processing, estimates state variables (output values), and comprehensively simulates an in-furnace state.

A method for estimating the hot metal production rate, the hot metal temperature, and the top gas temperature in the reference operation by the blast furnace mathematical model will be described. The setting conditions such as the blast conditions, the pulverized coal injection rate (PC), the blending ratio of reduced iron, the specific consumption of reduced iron, the blast moisture content, and O/C in the reference operation are input to the blast furnace mathematical model to estimate the state variables. The state variables to be estimated include at least the hot metal production rate, the hot metal temperature, and the top gas temperature. The blending ratio (% by mass) of reduced iron is a ratio of the mass of reduced iron to the mass of an iron-bearing material. The specific consumption (kg/t) of reduced iron is the weight of reduced iron consumed to produce 1 ton of hot metal. O/C is the weight ratio of an ore layer to a coke layer. The state variables to be estimated may further include a theoretical raceway adiabatic flame temperature, a bosh gas volume, a reducing agent ratio, a coke rate, a PCI rate, a slag rate, ηCO, ηH2, SLC, a furnace pressure drop, and the like.

It is noted that in the reference operation, the state variables in a steady state (the operation time is set to infinity) are estimated.

A method for acquiring the blast conditions and the pulverized coal injection rate in the second operation by the blast furnace mathematical model will be described. The setting conditions such as the blending ratio of reduced iron, the specific consumption of reduced iron, the blast moisture content, and O/C in the second operation are input to the blast furnace mathematical model and the simulation condition is set as "the hot metal production rate, the hot metal temperature, and the top gas temperature are the same as those in the reference operation", so that the blast conditions and the pulverized coal injection rate that satisfy the conditions are searched. In this case, the hot metal production rate, the hot metal temperature, and the top gas temperature in the second operation can also be estimated as the state variables. In this case, the output hot metal production rate, the output hot metal temperature, and the output top gas temperature may be completely the same as the hot metal production rate, the hot metal temperature, and the top gas temperature in the reference operation, or may be substantially the same. The substantially the same range can be appropriately set by adjusting the parameters of the blast furnace mathematical model. The description of the substantially the same meaning will not be repeated. It is noted that the operation conditions such as the blast moisture content and O/C in the second operation may be the same as or different from those in the reference operation.

In the second operation, the state variables in a steady state (the operation time is set to infinity) are estimated.

In the present embodiment, the parameter estimation step is realized by the analysis processing by the blast furnace mathematical model, but the present disclosure is not limited thereto, and the parameter estimation step may be realized by a method other than the blast furnace mathematical model.

For example, the parameter estimation step may be executed by the analysis processing using the RIST model. The RIST model is known as a partial balance model based on thermodynamics, and since the amount thereof is disclosed in, for example, Non-Patent Document 2, a detailed description thereof will be omitted.

### (S2: step of acquiring change information)

In the step of acquiring change information, information regarding time-dependent changes in one or both of the hot metal temperature and the hot metal production rate when the second operation is performed based on the blast conditions and the pulverized coal injection rate estimated in the parameter estimation step after switching from the reference operation to the first operation and then delaying by a predetermined time is acquired. Preferably, in the step of acquiring change information, the information related to the time-dependent change of both the hot metal temperature and the hot metal production rate is acquired. The "predetermined time" is, for example, a candidate value of the optimal delay time, and is any value greater than 0. The predetermined time is, for example, in a range of 1 hour to 10 hours. The point in time of switching from the reference operation to the first operation is a point in time of starting the first operation.

In the parameter estimation step, by inputting "the blast conditions, the pulverized coal injection rate, the blast moisture content, and the O/C of the first operation are the same as those of the reference operation", "the blending ratio of the reduced iron of the first operation is the same as that of the second operation", and "predetermined time (delay time)" as the setting conditions, "information related to a time-dependent change of one or both of the hot metal temperature and the hot metal production rate in a case where the switching to the second operation based on the blast conditions and the pulverized coal injection rate estimated in the parameter estimation step after the elapse of the predetermined time from the first operation" can be acquired as the state variable.

In the present embodiment, the step of acquiring change information is realized by the analysis processing by the blast furnace mathematical model, but the present disclosure is not limited thereto, and the parameter estimation step may be a method other than the blast furnace mathematical model. For example, the information related to the time-dependent change in a case where the switching to the second operation is performed after the elapse of the predetermined time from the first operation may be acquired based on the operation record.

### (S3: iteration step)

The step of acquiring change information is performed a plurality of times by changing the predetermined time, and the "information related to the time-dependent change of the hot metal temperature and the hot metal production rate" is acquired for each "predetermined time". In the iteration step, a result of each of a plurality of candidate values of the optimal delay time is estimated. The number of times of repeating the change information step is preferably, for example, 3 or more, 4 or more, or 5 or more.

### (S4: step of determining an optimal delay time)

Based on the information acquired in the iteration step, from among the "predetermined times", a predetermined time at which the time-dependent changes in one or both of the hot metal temperature and the hot metal production rate are minimized is determined as the optimal delay time. Whether or not the time-dependent changes are "minimum" can be determined by comparing with the hot metal temperature during the reference operation (hereinafter, also referred to as the hot metal temperature reference value) and with the hot metal production rate during the reference operation (hereinafter, also referred to as the hot metal production rate reference value). Hereinafter, the hot metal temperature reference value and the hot metal production rate reference value are collectively referred to as a "reference value". An exemplary example of a method for determining the optimal delay time will be shown below.

Determination method 1: the hot metal temperature and/or the hot metal production rate from the start of the first operation to the stabilization of the operation is calculated, and a predetermined time for the second operation at which the maximum value of the difference between the hot metal temperature and the hot metal temperature reference value or the maximum value of the difference between the hot metal production rate and the hot metal production rate reference value is minimized is set as the "optimal delay time". It is noted that the "operation is stabilized" means that the hot metal production rate and the hot metal temperature are restored to the level of the reference operation, and means, for example, 24 hours after the start of the first operation.

Determination method 2: each of a difference of the hot metal temperature and/or the hot metal production rate from the reference values thereof from the start of the first operation to the stabilization of the operation is obtained, and a predetermined time of the second operation at which the integral value of the difference between the hot metal temperature and the hot metal temperature reference value or the integral value of the difference between the hot metal production rate and the hot metal production rate reference value is minimized is set as the "optimal delay time".

Determination method 3: each of an average value of the hot metal temperature and an average value of the hot metal production rate from the start of the first operation to the stabilization of the operation is calculated, and a predetermined time of the second operation at which the difference between the average value of the hot metal temperature and the hot metal temperature reference value or the difference between the average value of the hot metal production rate and the hot metal production rate reference value is minimized is set as the "optimal delay time".

The determination method 1, the determination method 2, and the determination method 3 can be appropriately selected according to the operation state. For example, even in a short time, since an abrupt change in the hot metal temperature or the hot metal production rate has a high risk of destabilizing the operation, it is desirable to select the determination method 1 in a case where such a phenomenon is observed.

By performing S1 to S4 described above, the optimal delay time from the start of the first operation to the switching to the blast conditions and the pulverized coal injection rate estimated in the parameter estimation step can be estimated. By operating the blast furnace based on such an estimation result, the blast furnace can be stably operated while suppressing fluctuations in the hot metal production rate and the hot metal temperature.

That is, by starting the second operation after the optimal delay time has elapsed after switching from the reference operation to the first operation, the blast furnace can be stably operated while suppressing fluctuations of the hot metal production rate and the hot metal temperature. It is noted that the "start of the second operation after the optimal delay time has elapsed after switching from the reference operation to the first operation" means that the duration of the first operation is made to coincide with the optimal delay time. Here, the duration of the first operation and the optimal delay time may be substantially the same. For example, in a case where the duration of the first operation is, for example, within a range of the optimal delay time ±30 minutes, the duration of the first operation and the optimal delay time are regarded as being substantially the same, and it is regarded that the method for operating blast furnace, which is characterized by "start of the second operation after the optimal delay time has elapsed after switching from the reference operation to the first operation", is performed. In a case where the sensitivity, to the delay time, of the hot metal production rate or the hot metal temperature is small, a difference between the optimal delay time and the actual delay time is allowed to be large.

It is noted that as described in the description of the determination method 1, the determination method 2, and the determination method 3 as examples, in the step of determining an optimal delay time, the optimal delay time may be specified based on the time-dependent change in the hot metal temperature, or the optimal delay time may be specified based on the time-dependent change in the hot metal production rate. In a case where the time-dependent change in the hot metal temperature is used, in the step of acquiring change information, the acquisition of the time-dependent change in the hot metal production rate is not essential. In a case where the time-dependent change in the hot metal production rate is used, in the step of acquiring change information, the acquisition of the time-dependent change in the hot metal temperature is not essential.

On the other hand, in the step of acquiring change information, information related to the time-dependent changes in both the hot metal temperature and the hot metal production rate may be acquired, and in the step of determining an optimal delay time, any one of the time-dependent change in the hot metal temperature or the time-dependent change in the hot metal production rate may be used for determining the optimal delay time. For example, the optimal delay time may be determined based on the one having a higher sensitivity to the delay time between the time-dependent change in the hot metal temperature and the time-dependent change in the hot metal production rate.

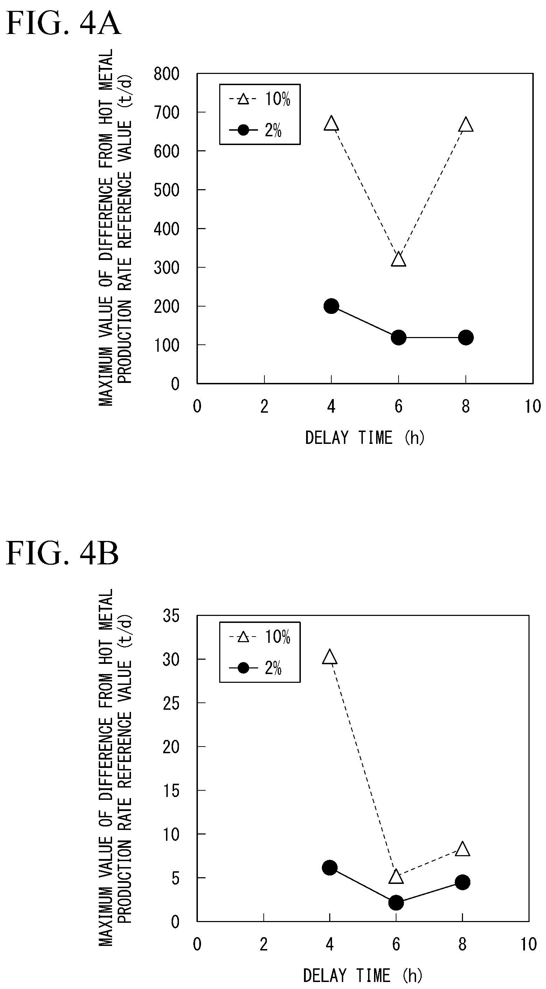

For example, in the step of acquiring change information for the example described later, both the time-dependent change of the hot metal temperature and the time-dependent change of the hot metal production rate are acquired. An example of the result is shown in FIGS. 4A and 4B. A more preferable method for determining the optimal delay time with reference to this data will be described.

In this example, both the graph showing the time-dependent change in the hot metal production rate shown in FIG. 4A and the graph showing the time-dependent change in the hot metal temperature shown in FIG. 4B have a downward convex shape. On the other hand, the graph showing the time-dependent change in the hot metal temperature shown in FIG. 4B has a steeper shape downward than the graph showing the time-dependent change in the hot metal production rate shown in FIG. 4A. That is, the sensitivity of the time-dependent change in the hot metal temperature to the delay time is higher than that of the time-dependent change in the hot metal production rate. In the cases shown in FIGS. 4A and 4B, it is preferable to determine the predetermined time at the data point where the time-dependent change in the hot metal temperature is minimized as the optimal delay time.

In the method for operating blast furnace described above, there is only one opportunity to increase the charging amount of reduced iron in the reference operation. When switching from the reference operation to the first operation, the charging amount of reduced iron is increased, but when switching from the second operation to the third operation, the charging amount of reduced iron is not increased. However, in the method for operating blast furnace according to the present disclosure, the opportunity to increase the charging amount of reduced iron may be set to two or more times. For example, when the second operation satisfies the definition of the reference operation, the second operation is regarded as the reference operation, and the above-described procedure is performed again, thereby making it possible to set the opportunity to increase the charging amount of reduced iron to two times. Of course, the above-described procedure can also be further performed. As a result, it becomes easier to stably operate the blast furnace while suppressing fluctuations in the hot metal production rate and the hot metal temperature. Hereinafter, a specific example of an embodiment in which the opportunity to increase the charging amount of reduced iron is set to two or more times will be described.

### (A Embodiment of recalculating optimal delay time)

In the method for operating blast furnace according to the present disclosure, a third operation and a fourth operation may be further performed. An operation in which blast conditions and a pulverized coal injection rate are the same as the blast conditions and the pulverized coal injection rate in the second operation, and a charging amount of reduced iron is larger than the charging amount of reduced iron in the second operation, is defined as a third operation. An operation in which the charging amount of reduced iron is the same as that in the third operation and the blast conditions and the pulverized coal injection rate are different from those in the third operation, is defined as a fourth operation. In a case where the second operation is regarded as the reference operation, the definition of the third operation is substantially the same as that of the first operation, and the definition of the fourth operation is substantially the same as that of the second operation.

Furthermore, the method for operating blast furnace according to the present disclosure may includes:
(S11) a second parameter estimation step of estimating the blast conditions and the pulverized coal injection rate in the fourth operation such that the hot metal production rate, the hot metal temperature, and the top gas temperature in the fourth operation are the same as the hot metal production rate, the hot metal temperature, and the top gas temperature in the second operation;
(S12) a second step of acquiring change information which acquires information regarding time-dependent changes in one or both of the hot metal temperature and the hot metal production rate when the fourth operation is performed based on the blast conditions and the pulverized coal injection rate estimated in the second parameter estimation step after switching from the second operation to the third operation and then delaying by a predetermined time;
(S13) a second iteration step of performing the second step of acquiring change information a plurality of times while changing the predetermined time; and
(S14) a second step of determining an optimal delay time, which determines the predetermined time that minimizes the time-dependent change in the hot metal temperature or the hot metal production rate as a second optimal delay time based on the information acquired in the second iteration step.

In a case where the second operation is regarded as the reference operation, the configurations of the second parameter estimation step, the second step of acquiring change information, the second iteration step, and the second step of determining an optimal delay time are substantially the same as the configurations of the parameter estimation step, the step of acquiring change information, the iteration step, and the step of determining an optimal delay time described above. That is, in the method for operating blast furnace according to the present disclosure, these steps may be repeated again.

In the second step of determining an optimal delay time, the second optimal delay time is calculated. After switching from the second operation to the third operation and then delaying by the second optimal delay time, the fourth operation based on the blast conditions and the pulverized coal injection rate estimated in the second parameter estimation step is started. As a result, the number of opportunities to increase the charging amount of reduced iron can be increased to two. As a matter of course, the above-described procedure can also be performed again by regarding the fourth operation as the reference operation. By increasing the charging amount of reduced iron in a stepwise manner, it becomes easier to stably operate the blast furnace while suppressing fluctuations in the hot metal production rate and the hot metal temperature.

### (B Embodiment in which optimal delay time for second operation is reused for fourth operation)

In the method for operating blast furnace according to the present disclosure, a third operation and a fourth operation may be further performed. An operation in which blast conditions and a pulverized coal injection rate are the same as the blast conditions and the pulverized coal injection rate in the second operation, and a charging amount of reduced iron is larger than the charging amount of reduced iron in the second operation, is defined as a third operation. An operation in which the charging amount of reduced iron is the same as that in the third operation and the blast conditions and the pulverized coal injection rate are different from those in the third operation, is defined as a fourth operation. In a case where the second operation is regarded as the reference operation, the definition of the third operation is substantially the same as that of the first operation, and the definition of the fourth operation is substantially the same as that of the second operation.

Furthermore, the method for operating blast furnace according to the present disclosure may include:
(S21) a second parameter estimation step of estimating the blast conditions and the pulverized coal injection rate in the fourth operation such that the hot metal production rate, the hot metal temperature, and the top gas temperature in the fourth operation are the same as the hot metal production rate, the hot metal temperature, and the top gas temperature in the second operation.

In a case where the second operation is regarded as the reference operation, the configuration of the second parameter estimation step is substantially the same as the configuration of the above-described parameter estimation step.

After switching from the second operation to the third operation and then delaying by the optimal delay time, the fourth operation based on the blast conditions and the pulverized coal injection rate estimated in the second parameter estimation step is started. Here, the optimal delay time applied to the fourth operation is the same as the optimal delay time applied to the second operation. In other words, the optimal delay time applied to the second operation is reused for the fourth operation.

When the embodiment A in which the optimal delay time is recalculated and the embodiment B in which the optimal delay time for the second operation is reused for the fourth operation are compared, in the embodiment B, the second step of acquiring change information, the second iteration step, and the second step of determining an optimal delay time are omitted. Therefore, the calculation process in the embodiment B is simpler than that in the embodiment A.

The embodiment A is suitable for a case where the blending ratio of reduced iron is increased unevenly. For example, in a case where the blending ratio of reduced iron in the reference operation is 0%, the blending ratio of reduced iron in the first operation and the second operation is 10%, and the blending ratio of reduced iron in the third operation and the fourth operation is 40%, it is preferable to recalculate the optimal delay time applied to the fourth operation.

The embodiment B is suitable for a case where the blending ratio of reduced iron is increased uniformly. For example, in a case where the blending ratio of reduced iron in the reference operation is 0%, the blending ratio of reduced iron in the first operation and the second operation is 20%, and the blending ratio of reduced iron in the third operation and the fourth operation is 40%, it is preferable to reuse the optimal delay time applied to the second operation for the fourth operation.

### (Example)

Hereinafter, the present disclosure will be specifically described with reference to examples.

According to the method described in the embodiment, the parameter estimation step was performed by performing the analysis processing using the blast furnace mathematical model. The set values given to the blast furnace mathematical model and the output state variables are shown in Table 2. In the present example, the operation in which reduced iron was not contained in the iron-bearing material was set as the reference operation, and the blending ratio of reduced iron in the second operation was set to about 10% by mass (10.3% by mass).

Through the analysis processing, the blast conditions and the pulverized coal injection rate in the second operation were estimated as a blast volume: 5,235 (Nm³/min), an oxygen enrichment ratio: 2.95 (%), and a pulverized coal injection rate (PC): 47.1 (t/hr).

**[Table 2]**

| Blast furnace parameters | Reference operation | Second operation |
|---|---|---|
| Blending ratio of reduced iron (%) | 0 | 10.3 |
| Specific consumption of reduced iron (kg/t) | 0 | 159 |
| Blast volume (Nm³/min) | 5,300 | 5,235 |
| Oxygen enrichment ratio (%) | 4.78 | 2.95 |
| Blast moisture content (g/Nm³) | 22 | 22 |
| O/C (-) | 5.0 | 5.0 |
| PC (t/hr) | 60.0 | 47.1 |
| Hot metal production rate (t/d) | 8,457 | 8,381 |
| Hot metal temperature (°C) | 1,535 | 1,535 |
| Furnace top temperature (°C) | 144 | 139 |
| Theoretical adiabatic flame temperature (°C) | 2,125 | 2,123 |
| Bosh gas volume | 8,028 | 7,546 |
| Reducing agent ratio (kg/t) | 496 | 443 |
| Coke rate (kg/t) | 324 | 308 |
| PCI rate (kg/t) | 172 | 135 |
| Slag rate (kg/t) | 320 | 284 |
| *η*CO (-) | 49.0 | 48.6 |
| *η*H₂ (-) | 51.8 | 51.0 |
| SLC (kg/t) | 81.2 | 66.9 |
| Furnace pressure drop (kPa) | 78.8 | 65.4 |

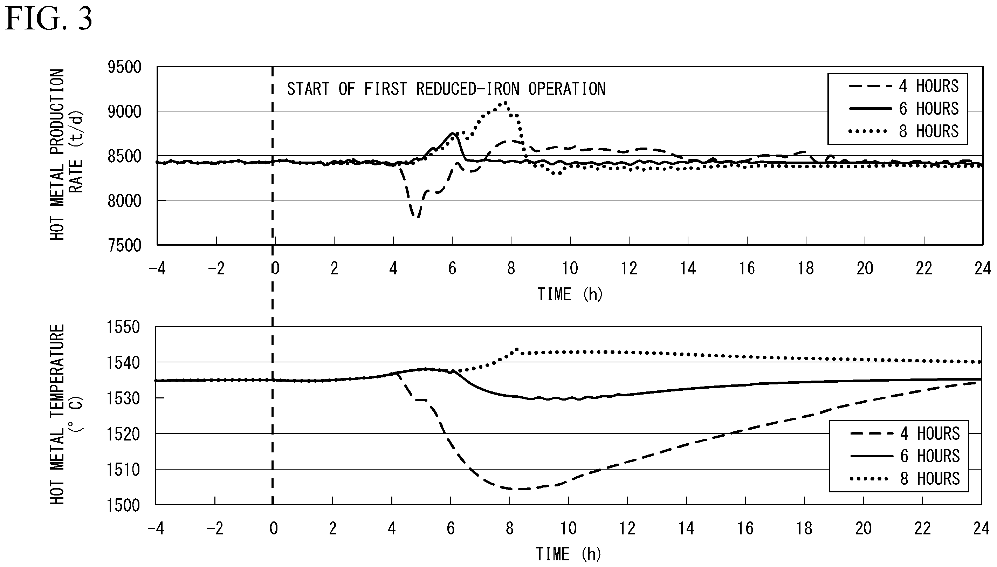

The predetermined time in the "step of acquiring change information" was set to three patterns of 4 hours, 6 hours, and 8 hours, and the "information related to the time-dependent change in the hot metal temperature and the hot metal production rate" in each pattern was acquired. FIG. 3 is a graph showing the acquisition results, in which the horizontal axis is the time and the vertical axis is the hot metal production rate or the hot metal temperature. It is noted that the time when the first operation was started was set to "0".

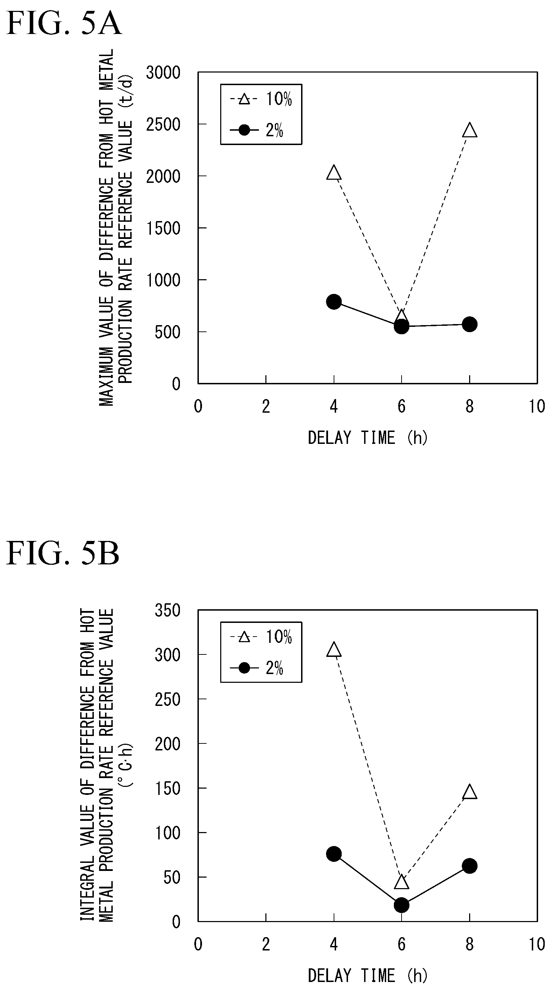

From FIG. 3, graphs of FIGS. 4A, 4B, 5A, and 5B were obtained.

FIG. 4A is a graph in which the horizontal axis is a "switching timing for switching from a first operation to a second operation" and the vertical axis is the "maximum value of a difference from the hot metal production rate reference value", which corresponds to a determination method 1.

FIG. 4B is a graph in which the horizontal axis is the "switching timing for switching from a first operation to a second operation" and the vertical axis is the "maximum value of a difference from the hot metal temperature reference value", which corresponds to a determination method 1.

FIG. 5A is a graph in which the horizontal axis is the "switching timing for switching from a first operation to a second operation" and the vertical axis is the "integral value of a difference from the hot metal production rate reference value", which corresponds to a determination method 2.

FIG. 5B is a graph in which the horizontal axis is the "switching timing for switching from a first operation to a second operation" and the vertical axis is the "integral value of a difference from the hot metal temperature reference value", which corresponds to a determination method 2.

The definitions of the determination methods 1 and 2 will not be repeated.

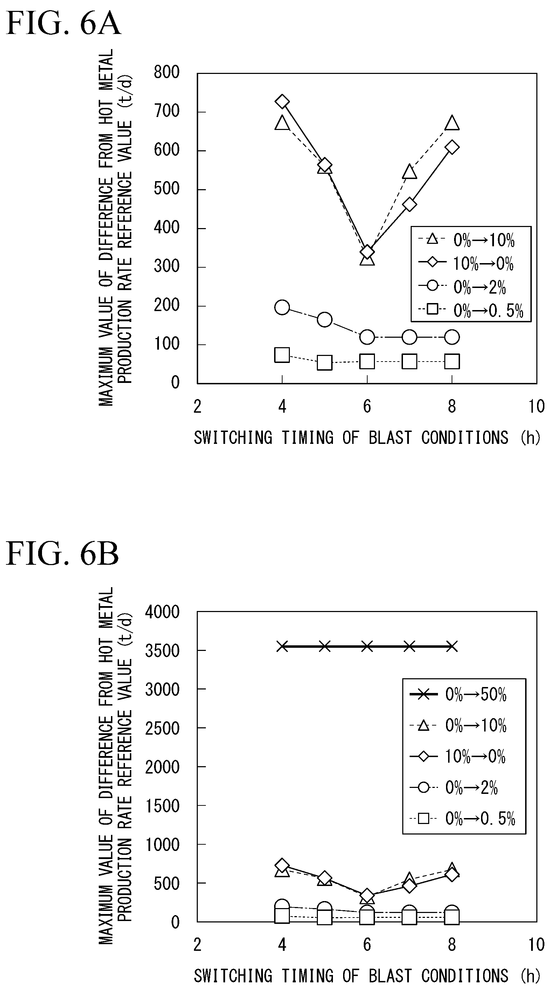

In addition, in addition to the patterns in which the predetermined time shown in FIG. 3 was set to 4 hours, 6 hours, and 8 hours, patterns in which the predetermined time was set to 5 hours and 7 hours were verified. As a result, the graphs shown in FIGS. 6A to 5B were obtained. Hereinafter, these graphs will be described. The markers described as "X% → Y%" in FIGS. 6A to 9B are data of operations in which the charging amount of the reduced iron in the reference operation is X% and the charging amount of the reduced iron in the first operation and the second operation is Y%. For example, the marker described as "0% → 5%" is data of an operation in which the charging amount of the reduced iron in the reference operation is 0% and the charging amount of the reduced iron in the first operation and the second operation is 5%.

FIGS. 6A and 6B are graphs in which the horizontal axis is the "switching timing for switching from a first operation to a second operation" and the vertical axis is the "maximum value of a difference from the hot metal production rate reference value", which corresponds to a determination method 1. It is noted that FIG. 6A is a graph in which "0% → 50%" is omitted from the five data series shown in FIG. 6B and then FIG. 6B is enlarged in the vertical direction.

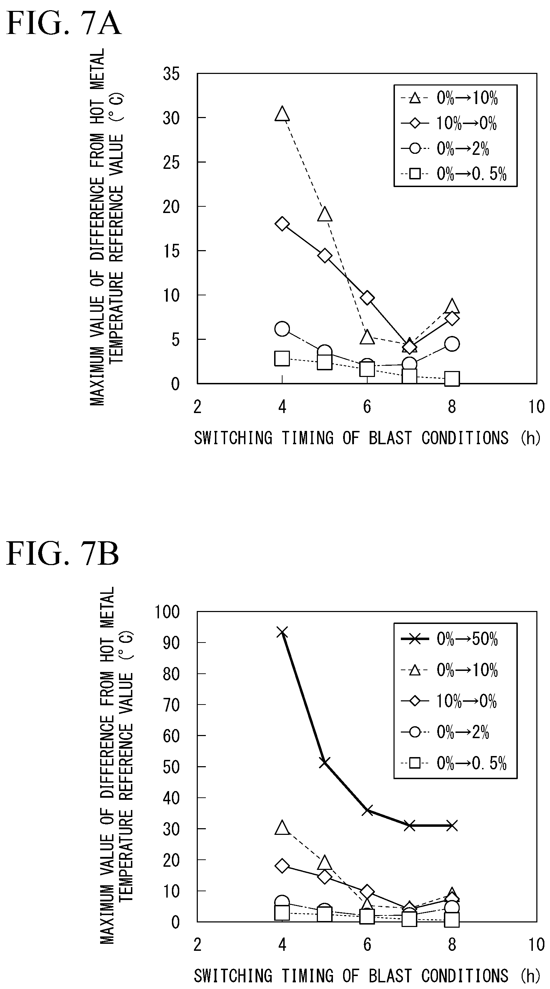

FIGS. 7A and 7B are graphs in which the horizontal axis is the "switching timing for switching from a first operation to a second operation" and the vertical axis is the "maximum value of a difference from the hot metal temperature reference value", which corresponds to a determination method 1. It is noted that FIG. 7A is a graph in which "0% → 50%" is omitted from the five data series shown in FIG. 7B and then FIG. 7B is enlarged in the vertical direction.

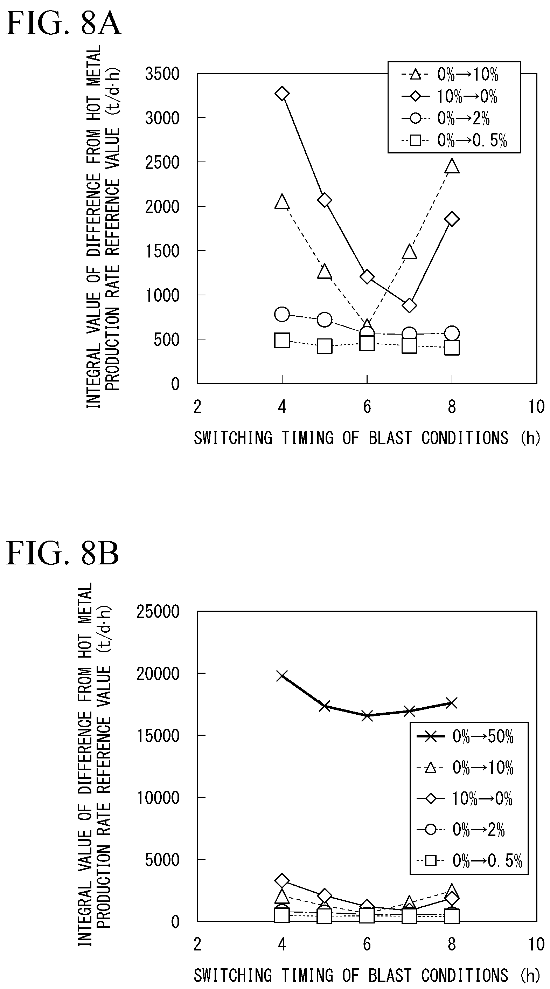

FIGS. 8A and 8B are graphs in which the horizontal axis is the "switching timing for switching from a first operation to a second operation" and the vertical axis is the "integral value of a difference from the hot metal production rate reference value", which corresponds to a determination method 2. It is noted that FIG. 8A is a graph in which "0% → 50%" is omitted from the five data series shown in FIG. 8B and then FIG. 8B is enlarged in the vertical direction.

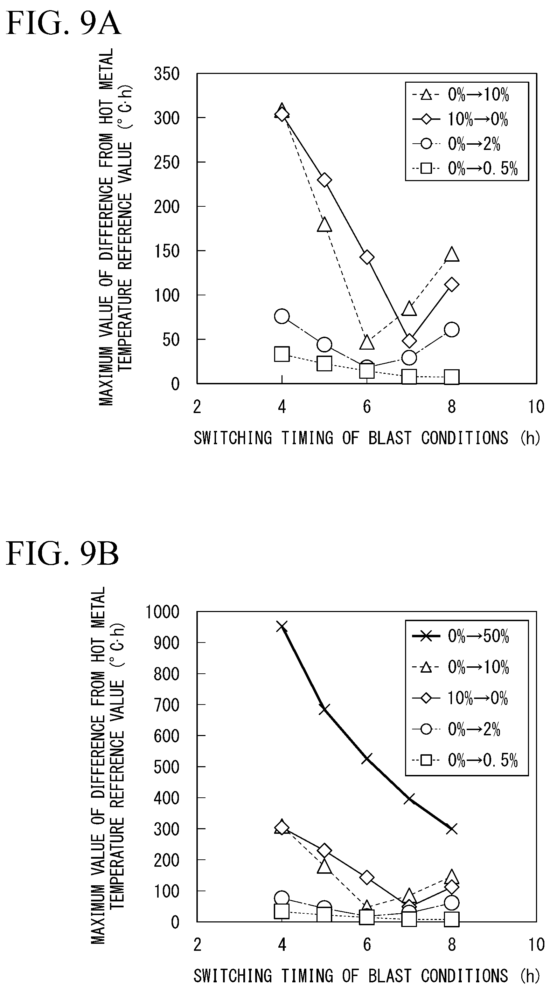

FIGS. 9A and 9B are graphs in which the horizontal axis is the "switching timing for switching from a first operation to a second operation" and the vertical axis is the "integral value of a difference from the hot metal temperature reference value", which corresponds to a determination method 2. It is noted that FIG. 9A is a graph in which "0% → 50%" is omitted from the five data series shown in FIG. 9B and then FIG. 9B is enlarged in the vertical direction.

As shown in Table 2, in a case where the operation in which the reduced iron is not contained in the iron-bearing material is set as the reference operation and the blending ratio of the reduced iron in the second operation is set to about 10% by mass (10.3% by mass), it is found that, as shown in FIGS. 4A to 5B, the maximum value and the integral value of "6 hours" are the smallest in any of the determination methods 1 and 2. Therefore, it is found that the time-dependent changes in the hot metal temperature and the hot metal production rate are minimized by setting "6 hours" as the optimal delay time.

In the conditions shown in Table 2, the results of changing the blending ratio of the reduced iron contained in the iron-bearing material in the reduced-iron operation to about 2% by mass (2.1% by mass) and performing the same analysis processing are shown in FIGS. 4A to 5B. Even in a case where the blending ratio of the reduced iron contained in the iron-bearing material is set to about 2% by mass, the optimal delay time is 6 hours.

The results of performing the same analysis processing under a plurality of conditions in which the blending ratio of the reduced iron in the reference operation and the blending ratio of the reduced iron in the second operation are changed are shown in FIGS. 6A, 6B, 7A, and 7B, and FIGS. 8A, 8B, 9A, and 9B. The optimal delay time is changed depending on the change condition of the blending ratio of the reduced iron. In a case where the optimal delay time is determined by the determination method 1 with a focus on the hot metal temperature (see FIGS. 7A and 7B), the optimal delay time under each condition is as shown in Table 3.

**[Table 3]**

| Blending ratio of reduced iron in | Blending ratio of reduced iron in | Optimal delay time |
|---|---|---|
| reference operation (% by mass) | second operation (% by mass) | |
| 0 | 50 | 7 Hours |
| 0 | 10 | 6 Hours |
| 10 | 0 | 7 Hours |
| 0 | 2 | 6 Hours |
| 0 | 0.5 | 8 Hours |

### REFERENCE SIGNS LIST

1 Blast furnace
2 Tuyere
3 Annular pipe
4 Blow pipe
5 Pulverized coal injection lance
6 Rotating chute
7 Tap hole

## Claims

1. A method for operating blast furnace, comprising:
a parameter estimation step, which estimates blast conditions and pulverized coal injection rate in a second operation such that a hot metal production rate, a hot metal temperature, and a top gas temperature in the second operation are the same as a hot metal production rate, a hot metal temperature, and a top gas temperature in a reference operation, in which a first operation is defined as an operation having blast conditions and a pulverized coal injection rate which are the same as blast conditions and a pulverized coal injection rate in the reference operation, and having a charging amount of reduced iron which is different from a charging amount of reduced iron in the reference operation, and in which the second operation is defined as an operation having a charging amount of reduced iron which is the same as the charging amount of reduced iron in the first operation, and having blast conditions and a pulverized coal injection rate which are different from the blast conditions and the pulverized coal injection rate in the first operation;
a step of acquiring change information, which acquires information regarding time-dependent changes in one or both of the hot metal temperature and the hot metal production rate when the second operation is performed based on the blast conditions and the pulverized coal injection rate estimated in the parameter estimation step after switching from the reference operation to the first operation and then delaying by a predetermined time;
an iteration step, which performes the step of acquiring change information a plurality of times while changing the predetermined time; and
a step of determining an optimal delay time, which determines the predetermined time that minimizes the time-dependent change in the hot metal temperature or the hot metal production rate as an optimal delay time based on the information acquired in the iteration step,
wherein, after switching from the reference operation to the first operation and then delaying by the optimal delay time, the second operation based on the blast conditions and the pulverized coal injection rate estimated in the parameter estimation step is started.

2. The method for operating blast furnace according to Claim 1,
wherein the charging amount of reduced iron in the first operation is larger than the charging amount of reduced iron in the reference operation.

3. The method for operating blast furnace according to Claim 1 or 2,
wherein, in the second operation, a blending ratio of reduced iron contained in iron-bearing materials is 0.5% by mass or more and 50% by mass or less.

4. The method for operating blast furnace according to Claim 1 or 2,
wherein, in the step of acquiring change information, the information regarding the time-dependent changes in both the hot metal temperature and the hot metal production rate is acquired, and
in the step of determining an optimal delay time, among the hot metal temperature and the hot metal production rate, the predetermined time that minimizes the time-dependent change in the hot metal temperature or the hot metal production rate having higher sensitivity to a delay time is determined as the optimal delay time.

5. The method for operating blast furnace according to Claim 1 or 2, further comprising:
a second parameter estimation step, which estimates blast conditions and pulverized coal injection rate in a fourth operation such that a hot metal production rate, a hot metal temperature, and a top gas temperature in the fourth operation are the same as the hot metal production rate, the hot metal temperature, and the top gas temperature in the second operation, in which the third operation is defined as an operation in which blast conditions and a pulverized coal injection rate are the same as the blast conditions and the pulverized coal injection rate in the second operation, and a charging amount of reduced iron is larger than the charging amount of reduced iron in the second operation, and in which the fourth operation is defined as an operation in which a charging amount of reduced iron is the same as the charging amount of reduced iron in the third operation, and blast conditions and a pulverized coal injection rate are different from the blast conditions and the pulverized coal injection rate in the third operation;
a second step of acquiring change information, which acquires information regarding time-dependent changes in one or both of the hot metal temperature and the hot metal production rate when the fourth operation is performed based on the blast conditions and the pulverized coal injection rate estimated in the second parameter estimation step after switching from the second operation to the third operation and then delaying by a predetermined time;
a second iteration step, which performes the second step of acquiring change information a plurality of times while changing the predetermined time; and
a second step of determining an optimal delay time, which determines the predetermined time that minimizes the time-dependent change in the hot metal temperature or the hot metal production rate as a second optimal delay time based on the information acquired in the second iteration step,
wherein, after switching from the second operation to the third operation and then delaying by the second optimal delay time, the fourth operation based on the blast conditions and the pulverized coal injection rate estimated in the second parameter estimation step is started.

6. The method for operating blast furnace according to Claim 1 or 2, further comprising:
a second parameter estimation step, which estimates blast conditions and pulverized coal injection rate in a fourth operation such that a hot metal production rate, a hot metal temperature, and a top gas temperature in the fourth operation are the same as the hot metal production rate, the hot metal temperature, and the top gas temperature in the second operation, in which the third operation is defined as an operation in which blast conditions and a pulverized coal injection rate are the same as the blast conditions and the pulverized coal injection rate in the second operation, and a charging amount of reduced iron is larger than the charging amount of reduced iron in the second operation and in which the fourth operation is defined as an operation in which a charging amount of reduced iron is the same as the charging amount of reduced iron in the third operation, and blast conditions and a pulverized coal injection rate are different from the blast conditions and the pulverized coal injection rate in the third operation, wherein
after switching from the second operation to the third operation and then delaying by the optimal delay time, the fourth operation based on the blast conditions and the pulverized coal injection rate estimated in the second parameter estimation step is started.
